# EUROPEAN PATENT APPLICATION

(11) **EP 4 564 561 A1**
(43) Date of publication of application: **04.06.2025**
(21) Application number: 22960397.2
(22) Date of filing: 30.09.2022
(51) Int. Cl.: H01M 50/30, H01M 50/531, H01M 50/20, H01M 10/613, H01M 10/6551

(54) **BATTERY AND ELECTRIC DEVICE**

(71) Applicant: CONTEMPORARY AMPEREX TECHNOLOGY (HONG KONG) LIMITED, Hong Kong (HK)
(72) Inventor: XU, Chenyi, Ningde, Fujian 352100 (CN); TANG, Yu, Ningde, Fujian 352100 (CN); LI, Xing, Ningde, Fujian 352100 (CN); ZHANG, Chenchen, Ningde, Fujian 352100 (CN); HUANG, Xiaoteng, Ningde, Fujian 352100 (CN)
(74) Representative: Frick, Robert
(86) International application number: PCT/CN2022/123529
(87) International publication number: WO 2024/065785

(57) **Abstract**

A battery (1000) and an electrical device (2000) are provided. The battery (1000) includes at least one cell group (100). The cell group (100) includes two cell rows (10). Each cell row (10) includes at least one cell (1). Each cell (1) is provided with an electrical connection portion (11) at a side of the cell (1) facing the other cell row (10) in the same group (10). Each cell (1) is further provided with a pressure relief portion (12). The pressure relief portion (12) and the electrical connection portion (11) are disposed at different sides of the cell (1).

## Description

### TECHNICAL FIELD

The present disclosure relates to the field of battery technologies, and more particularly, to a battery and an electrical device.

### BACKGROUND

In the related art, when the internal pressure of the battery is too high, the battery is relieved by means of pressure relief to ensure the safe use of the battery. However, during the pressure relief of the cell, the discharge from the cell is likely to flow to the electrical connection region of the battery, which causes problems such as high-voltage ignition and insulation failure.

### SUMMARY

Embodiments of the present disclosure provide a battery and an electrical device, which can effectively improve the use safety of the battery.

In a first aspect, the embodiments of the present disclosure provide a battery. The battery includes at least one cell group. Each of the at least one cell group includes two cell rows. Each of the two cell rows includes at least one cell. Each of the at least one cell is provided with an electrical connection portion at a side of the cell facing the other cell row in the same group. Each of the at least one cell is further provided with a pressure relief portion. The pressure relief portion and the electrical connection portion are arranged at different sides of the cell.

In the above technical solution, since the electrical connection portion and the pressure relief portion of the cell are respectively located at different surfaces of the cell, a relatively large distance between the electrical connection portion and the pressure relief portion of the cell is ensured, which effectively avoids problems of insulation failure, high-voltage ignition, and the like caused by conductive particles in discharge discharged from the cell through the pressure relief portion flowing to the electrical connection portion under the condition of thermal runaway and the like. A creepage gap between conductive components in the battery is ensured to avoid a short-circuit. At the same time, the electrical connection portion of the cell and the pressure relief portion of the other cell row in the same cell group do not facing towards. Therefore, the electrical connection portion of the cell is protected from an influence of discharge discharged from other cells through the pressure relief portions. That is, an influence of discharge discharged from the cell through the pressure relief portion on electrical connection portions of other cells is reduced, and the use safety and reliability of the battery are ensured. In addition, since the electrical connection portions of the two cell rows in the same cell group are opposite to each other, an electrical connection of the two cell rows in the same cell group is realized, thereby contributing to increased productivity and centralized protection of the electrical connection, etc. In short, the electrical connection of the battery is convenient, and the thermal runaway has little effect on the electrical connection.

In some embodiments, the pressure relief portion is disposed at a side of the cell facing away from the other cell row in the same group. In the above technical solution, a distance between the electricity and the gas is long, i.e., an electric connection region is far away from a discharge region. Therefore, the thermal runaway has less effect on the electric connection.

In some embodiments, the pressure relief portion and the electrical connection portion are disposed at two length ends of the cell. In the above technical solution, the distance between the electricity and the gas is relatively long, i.e., the electric connection region is far away from the discharge region. Therefore, the thermal runaway has less effect on the electric connection.

In some embodiments, the pressure relief portion and the electrical connection portion are disposed at two sides of the cell in a horizontal direction. In the above technical solution, a problem that the discharge emitted from the pressure relief portion having strong diffusion ability, due to a position of the pressure relief portion relative to the electrical connection portion being too high, diffuses to the electrical connection region of the electrical connection portion can be avoided. Additionally, by setting a space where the electrical connection portions are opposite to each other in a horizontal direction, a height of the battery can be reduced.

In some embodiments, the side of the cell facing the other cell row in the same group is a first end wall. A side of the cell facing away from the other cell row in the same group is a second end wall. A peripheral sidewall of the cell is connected between the first end wall and the second end wall. The pressure relief portion is disposed at the peripheral sidewall. In the above technical solution, a certain distance between the electricity and the gas can be maintained, which allows the safety of the battery to be improved.

In some embodiments, each of the two cell rows includes a plurality of cells arranged in a first direction. Two cell rows in a same group are arranged in a second direction. The peripheral sidewall includes a first sidewall and a second sidewall that are opposite to each other in a third direction. The pressure relief portion is disposed at the first sidewall. Any two of the first direction, the second direction, and the third direction are perpendicular to each other. In the above technical solution, a discharge position can avoid an arrangement direction, that is, pressure relief is not performed between two adjacent cells in the same row. Thus, the collection of the discharged gas is facilitated, the heat diffusion influence is reduced and the structural compactness of the battery is improved.

In some embodiments, the electrical connection portion is disposed closer to the second sidewall than to the first sidewall. In the above technical solution, the distance between the electricity and the gas can be extended as far as possible to further reduce the influence caused by the thermal runaway.

In some embodiments, the pressure relief portion is disposed closer to the second end wall than to the first end wall. In the above technical solution, the distance between the electricity and the gas can be extended as far as possible to further reduce the influence caused by the thermal runaway.

In some embodiments, a thickness direction of the cell is perpendicular to a horizontal direction of the cell. In the above technical solution, the height of the battery can be effectively reduced.

In some embodiments, each of the two cell rows includes a plurality of cells arranged in a width direction of the cell. In the above technical solution, the battery has more cells and a higher electric quantity.

In some embodiments, each of the two cell rows comprises a plurality of cells arranged in a first direction. Two cell rows in a same group are arranged in a second direction perpendicular to the first direction. In the above technical solution, the battery has more cells and a higher electric quantity.

In some embodiments, a multi-layer cell group is composed of a plurality of cell groups arranged in a third direction. The third direction is perpendicular to the first direction and the second direction. In the above technical solution, the battery has more cells and a higher electric quantity.

In some embodiments, a number of cell groups in the multi-layer cell group is less than a number of cells in the cell row. In the above technical solution, on the premise of ensuring that a certain number of cell rows are arranged, an extrusion force subjected by the cell row in the height direction can be reduced conveniently, and an influence of the extrusion force on the intensity of the cell when the cell is relieved is reduced.

In some embodiments, the number of cell groups in the multi-layer cell group includes two or three cell groups. In the above technical solution, on the premise of ensuring that a certain number of cell rows are arranged, an extrusion force subjected by the cell row in a height direction can be reduced conveniently, and the influence of the extrusion force on the intensity of the cell when the cell is relieved is reduced.

In some embodiments, two cells opposite to each other in a same group form an opposition unit. At least one opposition unit is a first opposition unit. Electrical connection portions of the two cells in the first opposition unit are offset from each other. In the above technical solution, since the electrical connection portions are offset from each other, a space required for the electrical connection can be reduced, and a space of the battery can be better utilized.

In some embodiments, the side of the cell facing the other cell row in the same group is a first end wall. In the first opposition unit, the respective electrical connection portions each have a same position relative to the first end wall. The opposite first end walls are offset from each other. In the above technical solution, the electrical connection portions can be offset from each other when the cells are not exactly opposite to each other.

In some embodiments, the side of the cell facing the other cell row in the same group is a first end wall. In the first opposition unit, the respective electrical connection portions have different positions relative to the first end wall. The opposite first end walls are exactly opposite to each other. In the above technical solution, the electrical connection portions can be offset from each other when the cells are exactly opposite to each other.

In some embodiments, the side of the cell facing the other cell row in the same group is a first end wall. In the first opposition unit, the opposite electrical connection portions are offset from each other in a length direction of the first end wall. In the above technical solution, a width of the cell can be reduced.

In some embodiments, the side of the cell facing the other cell row in the same group is a first end wall. In the first opposition unit, the opposite electrical connection portions are offset from each other in a width direction of the first end wall. In the above technical solution, a length of the cell can be reduced.

In some embodiments, the side of the cell facing the other cell row in the same group is a first end wall. In the first opposition unit, the opposite electrical connection portions are diagonally offset from each other. In the above technical solution, the space of the battery is well utilized and easy to layout.

In some embodiments, the side of the cell facing the other cell row in the same group is a first end wall. In the first opposition unit, a distance between the opposite first end walls is smaller than or equal to a sum of heights of the opposite electrical connection portions protruding from the first end walls. In the above technical solution, the space of the battery is well utilized.

In some embodiments, two cells opposite to each other in a same group form an opposition unit. At least one opposition unit is a second opposition unit. Electrical connection portions of the two cells in the second opposition unit are exactly opposite to each other. In the above technical solution, the battery is easy to be processed and produced.

In some embodiments, in the second opposition unit, at least one pair of electrical connection portions exactly opposite to each other abuts against and supports each other. In the above technical solution, a gap between the electrical connection portion and the other electrical connection portion can be reduced, which can improve the structural compactness of the battery and better utilize the space of the battery. The overall structural strength of the battery and the stability of the battery can be improved.

In some embodiments, the side of the cell facing the other cell row in a same group is a first end wall. In the second opposition unit, a plurality of electrical connection portions on each cell protrudes from the first end wall at different heights. The electrical connection portions with a larger protruding height abut against and support each other. In the above technical solution, a gap between the electrical connection portion and the other electrical connection portion can be reduced, which can improve the structural compactness of the battery and better utilize the space of the battery. The overall structural strength of the battery and the stability of the battery can be improved.

In some embodiments, the side of the cell facing the other cell row in a same group is a first end wall. In the second opposition unit, a plurality of electrical connection portions on each cell protrudes from the first end wall at a same height. The electrical connection portions exactly opposite to each other abut against and support each other. In the above technical solution, a gap between the electrical connection portion and the other electrical connection portion can be reduced, which can improve the structural compactness of the battery and can better utilize the space of the battery. The overall structural strength of the battery and the stability of the battery can be improved.

In some embodiments, two cells opposite to each other in a same group form an opposition unit. Two cells in at least one opposition unit abut against and support each other through a support structure. In the above technical solution, a problem of the structural strength of the battery can be solved.

In some embodiments, the side of the cell facing the other cell row in a same group is a first end wall. The support structure includes a support table disposed at the first end wall. In the above technical solution, the problem of the structural strength of the battery can be solved.

In some embodiments, each of the two cells abutting against and supporting each other through the support structure is provided with the support table. The opposite support tables are opposite to each other to abut against and support each other. In the above technical solution, the problem of the structural strength of the battery can be solved.

In some embodiments, the support table is integrally formed at the first end wall. In the above technical solution, procedures for mounting can be reduced and grouping can be easily done.

In some embodiments, the support table is assembled to the first end wall. In the above technical solution, the support table can be manufactured independently for easy forming.

In some embodiments, the support structure includes a filling adhesive disposed between the opposite cells. In the above technical solution, the structural strength of the battery can be enhanced.

In some embodiments, an insulator is disposed between the two cell rows in the cell group. In the above technical solution, the safety and reliability of the battery can be improved.

In some embodiments, the insulator includes an insulation sheet and an insulation adhesive disposed between the two cell rows. The insulation sheet is fixed to the cell rows by the insulation adhesive. The insulation adhesive is a filling adhesive or a double-sided adhesive. In the above technical solution, insulation is easily achieved and the structural strength of the battery is good.

In some embodiments, at least one of the two cell rows in the cell group is provided with an insulation cover. The insulation cover covers the electrical connection portions on the corresponding cell row. In the above technical solution, the battery is easy to be manufactured and has good insulation reliability.

In some embodiments, each of the two cell rows includes a plurality of cells. The opposite electrical connection portions in a same group are not connected.

In some embodiments, each of the two cell rows includes a plurality of cells arranged in a first direction. Two cell rows in a same group are arranged in a second direction. A multi-layer cell group is composed of a plurality of cell groups arranged in a third direction. The cell rows at a same side in the multi-layer cell group are electrically connected.

In some embodiments, each of the two cell rows includes a plurality of cells. The opposite electrical connection portions in a same group are electrically connected.

In some embodiments, the opposite electrical connection portions in the same group are directly butt-welded or connected through a conductive sheet.

In some embodiments, the battery further includes a thermal management member. The thermal management member includes a heat exchange portion and is configured to exchange heat with the cell. In the above technical solution, the cell is facilitated to have a suitable operating temperature to ensure the service life of the cell.

In some embodiments, the thermal management member further includes a first beam disposed between two cell rows in a same group. Each side of the first beam facing the cell row is provided with the heat exchange portion. In the above technical solution, the heat exchange portion is disposed towards the electrical connection portion, which can be used to control a temperature of the electrical connection portion. For example, the heat exchange portion can be used to cool an overcurrent member, thereby improving the operating safety and reliability of the battery.

In some embodiments, the thermal management member further includes a second beam disposed at each of opposite sides of one group including two cell rows. Each side of the second beam facing the corresponding cell row is provided with the heat exchange portion. In the above technical solution, the thermal management member can be prevented from leakage of fluid which causes a short circuit to the electrical connection area.

In some embodiments, the battery further includes a box member. The box member includes a side enclosing panel and a partition beam. The partition beam is located within a space enclosed by the side enclosing panel to divide the space into a plurality of accommodation cavities. Each of the plurality of accommodation cavities is configured to accommodate the cell row. The partition beam is configured as the thermal management member. In the above technical solution, the partition beam is used as a thermal management 4ember to adjust a temperature of the cell, which allows the space occupation to be saved to better utilize the space of the battery.

In some embodiments, the battery further includes a discharge member. The discharge member is disposed at a side towards which the pressure relief portion faces. The discharge member has a discharge cavity configured to receive discharge discharged by the pressure relief portion. In the above technical solution, the collection of the discharge is facilitated, adverse effects caused by disorderly diffusion of the discharge is avoided, the diffusion effect of the thermal runaway is reduced and the safety of the battery is improved.

In some embodiments, a heat exchange portion is further disposed at a side of the discharge member facing towards the cell row.

In a second aspect, the embodiments of the present disclosure further provide an electrical device including the battery described above. The battery is configured to provide electrical energy to the electrical device.

### BRIEF DESCRIPTION OF DRAWINGS

FIG. 1 is a schematic view of an electrical device in the related art.
FIG. 2 is a schematic view of a battery in the related art.
FIG. 3 is a schematic view of a battery according to some embodiments of the present disclosure.
FIG. 4 is a schematic view of a cell shown in FIG. 3 from an angle.
FIG. 5 is a schematic view of the cell shown in FIG. 4 from an angle.
FIG. 6 is a schematic view of an opposition unit shown in FIG. 3.
FIG. 7 is a schematic view of the opposition unit shown in FIG. 6 from an angle.
FIG. 8 is a schematic view of a cell according to some embodiments of the present disclosure.
FIG. 9 is a schematic view of a cell according to some embodiments of the present disclosure.
FIG. 10 is a schematic view of an opposition unit according to some embodiments of the present disclosure.
FIG. 11 is a schematic view of a cell according to some embodiments of the present disclosure.
FIG. 12 is a schematic view of an opposition unit according to some embodiments of the present disclosure.
FIG. 13 is a schematic view of an opposition unit according to some embodiments of the present disclosure.
FIG. 14 is a schematic view of an opposition unit according to some embodiments of the present disclosure.
FIG. 15 is a schematic view of an opposition unit according to some embodiments of the present disclosure.
FIG. 16 is a schematic view of a battery according to some embodiments of the present disclosure.
FIG. 17 is a schematic view of a partial composition of the battery shown in FIG. 16.
FIG. 18 is an exploded view of a battery according to some embodiments of the present disclosure.
FIG. 19 is an assembly view of the battery shown in FIG. 18.
FIG. 20 is a schematic view of the battery shown in FIG. 18.
FIG. 21 is a schematic view of a battery according to some embodiments of the present disclosure.
FIG. 22 is a schematic view of the battery shown in FIG. 21.
FIG. 23 is an exploded view of a battery according to some embodiments of the present disclosure.
FIG. 24 is a schematic view of a battery and a discharge member according to some embodiments of the present disclosure.
FIG. 25 is a schematic view of a vehicle according to some embodiments of the present disclosure.

Reference numerals of the accompanying drawings:
battery 1000; cell group 100; cell row 10; cell 1; electrical connection portion 11; pressure relief portion 12; first end wall 131; second end wall 132; peripheral sidewall 133; first sidewall 1331; second sidewall 1332; opposition unit 20; first opposition unit 21; second opposition unit 22; support structure 30; support table 31; insulator 40; insulation cover 41; thermal management member 50; heat exchange portion 501; first beam 51; second beam 52; box member 60; side enclosing panel 61; partition beam 62; discharge member 70; discharge chamber 701; conductive sheet 80; electrical device 2000.

### DESCRIPTION OF EMBODIMENTS

In order to make objects, technical solutions, and advantages of the present disclosure more apparent, technical solutions according to embodiments of the present disclosure will be described clearly and completely below with reference to the accompanying drawings of the embodiments of the present disclosure. Obviously, the embodiments described below are only a part of the embodiments of the present disclosure, rather than all embodiments of the present disclosure. All other embodiments obtained by those skilled in the art based on the embodiments of the present disclosure without inventive labor shall fall within the protection scope of the present disclosure.

Unless otherwise defined, all technical and scientific terms used herein have the same meaning as commonly understood by those skilled in the art of the present disclosure. Terms in the specification of the present disclosure herein are only used for the purpose of describing specific embodiments, and are not intended to limit the present disclosure. In addition, the terms "including" and "having" and any variants thereof as used in the description of the embodiments of the present disclosure, the appended claims, and the above accompanying drawings are intended to cover non-exclusive inclusions. Terms "first", "second", etc. in the embodiments of the present disclosure, the appended claims, and the above accompanying drawings are not intended for the description of a specific order or a priority relationship, but rather distinguish different objects.

Reference herein to "an embodiment" means that a particular feature, structure or characteristic described in combination with the embodiment can be included in at least one embodiment of the present disclosure. The appearance of this phrase in various places in the specification are not necessarily all referring to the same embodiment, nor is it an independent or alternative embodiment that is mutually exclusive of other embodiments.

In the present disclosure, unless specified or limited otherwise, the terms "mounted," "connected," "connected to" and "attached" are understood broadly, such as fixed, detachable, or integrated connection, and also can be direct and indirect connected via a media, and further can be internal communication between two components. The specific meaning of the above terms in the present disclosure can be understood by those skilled in the art according to the specific implementation.

In the present disclosure, terms "and/or" describes an association relationship between correlated objects, including three relationships. For example, "A and/or B" can mean A only, B only, or both A and B. In addition, the symbol "/" in the present disclosure generally indicates an "or" relationship between the correlated objects preceding and succeeding the symbol.

In the embodiments of the present disclosure, the same reference numerals represent the same components, and detailed descriptions of the same components in different embodiments are omitted for the sake of simplicity. It should be understood that a thickness, a length, a width, and other dimensions of various components in the embodiments of the present disclosure, as well as an overall thickness, length, width, and other dimensions of an integrated device illustrated in the drawings, are only exemplary illustrations and should not constitute any limitation to the present disclosure.

In the present disclosure, "plurality of" means two or more (including two).

In the present disclosure, the battery mentioned in the embodiments of the present disclosure refers to a single physical module including one or more cell to provide a higher voltage and capacity. For example, the battery mentioned in the present disclosure can include a battery module or a battery pack. The battery generally includes a box for packaging one or more cell or a plurality of battery modules. The box can prevent liquid or other foreign matters from affecting charging or discharging of the cell. Of course, some batteries without the above box can be provided directly in the electrical device installation cabin.

In the present disclosure, the cell can include a lithium ion secondary battery, a lithium ion primary battery, a lithium sulfur battery, a sodium lithium ion battery, a sodium ion battery or a magnesium ion battery, etc., which are not limited in the embodiments of the present disclosure. The cell can be in a shape of a cylinder, a flat body, a cuboid or other shapes, which are not limited in the embodiments of the present disclosure. The cell is generally divided into three types based on a packaging method: a cylinder-shaped cell, a square-shaped cell, and a soft-pack cell, which are not limited in the embodiments of the present disclosure.

For example, the cell can include a housing, an electrode assembly, and an electrolyte. The housing is used to accommodate the electrode assembly, and the electrolyte. The electrode assembly consists of a positive electrode plate, a negative electrode plate, and a separator. Operation of the cell primarily relies on a movement of metallic ions between the positive and negative electrode plates. The positive electrode plate includes a positive current collector and a positive electrode active material layer. The positive electrode active material layer is coated at a surface of the positive current collector. A part of the positive current collector that is not coated with the positive electrode active material layer protrudes relative to a part of the positive current collector that is coated with the positive electrode active material layer. The part of the positive current collector that is not coated with the positive active material layer serves as a positive electrode tab. A lithium-ion battery is taken as an example, a material of a positive current collector can be aluminum, and a positive electrode active material can be lithium cobalt oxide, lithium iron phosphate, ternary lithium, or lithium manganate, etc.

A negative electrode plate includes a negative current collector and a negative electrode active material layer. The negative electrode active material layer is coated at a surface of the negative current collector. A part of the negative current collector that is not coated with the negative electrode active material layer protrudes relative to a part of the negative current collector that is coated with the negative electrode active material layer. The part of the negative current collector that is not coated with the negative electrode active material layer serves as a negative electrode tab. A material of the negative electrode current collector can be copper, and a negative electrode active material can be carbon, or silicon, etc. To ensure no fusing with a high current passing through, a plurality of positive electrode tabs is provided and stacked together, and a plurality of negative electrode tabs is provided and stacked together.

A material of the separator can be Polypropylene (PP), Polyethylene (PE), etc. In addition, the electrode assembly can have a winding structure or a laminated structure, and the embodiments of the present disclosure are not limited thereto.

The cell can be provided with poles connected to tabs as an electrical connection portion of the cell. In addition, the cell is usually provided with a pressure relief portion. When an internal pressure of the cell is too large (such as thermal runaway), the pressure relief portion is used to release internal substances of the cell (such as gas, liquid, particulate matter, etc.) to reduce the internal pressure of the cell. In this way, dangerous accidents such as the explosion of the cell due to the rapid pressurization of the cell can be avoided. For example, the pressure relief portion can be an explosion-proof valve, explosion-proof plate, and the like.

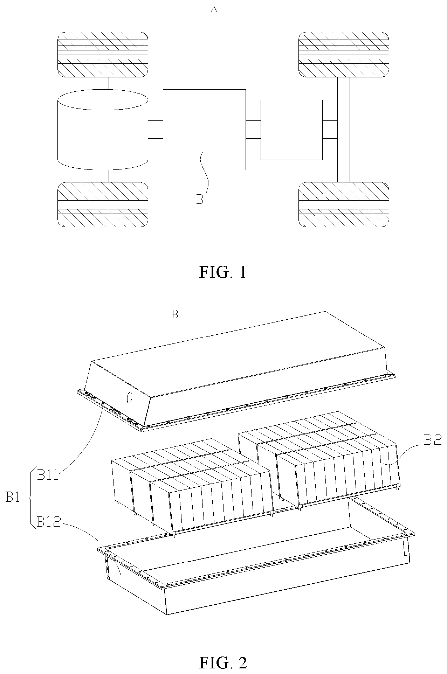

For example, as shown in FIG. 1 and FIG. 2, in some electrical devices A, a battery B is adopted to supply power. The battery B includes a case B1 and a cell B2. The case B1 includes an upper case B11 and a lower case B 12. In conventional technology, the electrical connection portion and the pressure relief portion are usually arranged at a surface of the cell at a same side. But when the pressure relief portion is discharged to release the internal pressure of the cell, conductive particles in the discharge of the cell are easy to move to the electrical connection portion and overlap the electrical connection portion to form an internal short-circuit, or a creepage gap between the electrical connection portions is reduced, resulting in an insulation failure such as a high voltage ignition.

In order to avoid the insulation failure caused by releasing the internal pressure of the cell, it was found that the electrical connection portion and the pressure relief portion of the cell can be respectively arranged at different end surfaces of the cell. However, in the battery, a plurality of cells is provided and arranged in a plurality of rows to allow the battery to have an appropriate voltage and capacity. The above structure can only allow the electrical connection portion of each cell far away from its own pressure relief portion. When the pressure relief portion of each cell is disposed towards the electrical connection portion of the adjacent cell, conductive particles in the discharge of the cell are still easy to move to the electrical connection portion, or a creepage gap between conductive components is reduced, resulting in the insulation failure such as the high voltage ignition.

Based on the above content, a battery 1000 is provided. The battery includes at least one cell group 100. The cell group 100 includes two cell rows 10. Each cell row 10 includes at least one cell 1. Each cell 1 is provided with an electrical connection portion 11 at a side of the cell facing the other cell row 10 in the same group. Each cell 1 is further provided with a pressure relief portion 12. The pressure relief portion 12 and the electrical connection portion 11 are arranged at different sides of the cell 1.

In the battery 1000 with the above structure, the pressure relief portion 12 of the cell 1 and the electrical connection portion 11 of the cell 1 are respectively arranged at different end surfaces of the cell 1. In this way, the discharge discharged from the cell 1 through the pressure relief portion 12, such as conductive particles, etc., is effectively prevented from flowing to the electrical connection portion 11 which causes the insulation failure such as the high-voltage ignition. In addition, a creepage gap between conductive components in the battery 1000 is ensured to avoid an internal short-circuit.

Additionally, the electrical connection portion 11 of the cell 1 and the pressure relief portion 12 of the other cell row 10 in the same cell group 100 do not facing towards. Therefore, the electrical connection portion 11 of the cell 1 is protected from an influence of discharge discharged from other cells 1 through the pressure relief portion 12. That is, the influence of the discharge discharged from the cell 1 through the pressure relief portion 12 on the electrical connection portions 11 of other cells 1 is reduced, and the use safety and reliability of the battery 1000 are ensured.

The battery 1000 disclosed in the embodiment of the present disclosure can be used in, but not limited to, an electrical device 2000 such as a vehicle, a ship, or an aircraft. The battery 1000 disclosed in the present disclosure can be used to form a power supply system of the electrical device 2000 to ensure the use safety and reliability of the electrical device 2000.

For example, the electrical device 2000 disclosed in the embodiment of the present disclosure can be, but not limited to, a vehicle, a mobile phone, a tablet, a notebook computer, a ship, a spacecraft, an electric toy, an electric tool, and the like. The vehicle can be a fuel vehicle, a gas vehicle, a new energy vehicle, or a rail vehicle, and the new energy vehicle can be a pure electric vehicle, a hybrid vehicle, an extended range vehicle, etc. The spacecraft includes an airplane, a rocket, a space shuttle, a spacecraft, etc. The electric toy includes a stationary electric toy or a movable electric toy, such as a game machine, an electric vehicle toy, an electric ship toy, an electric airplane toy, etc. The electric tool includes a metal cutting electric tool, a grinding electric tool, an assembly electric tool, and a railway electric tool, such as an electric drill, an electric grinder, an electric wrench, an electric screwdriver, an electric hammer, an impact drill, a concrete vibrator, and an electric planer.

Hereinafter, the battery 1000 according to the embodiments of the present disclosure will be described with reference to the accompanying drawings.

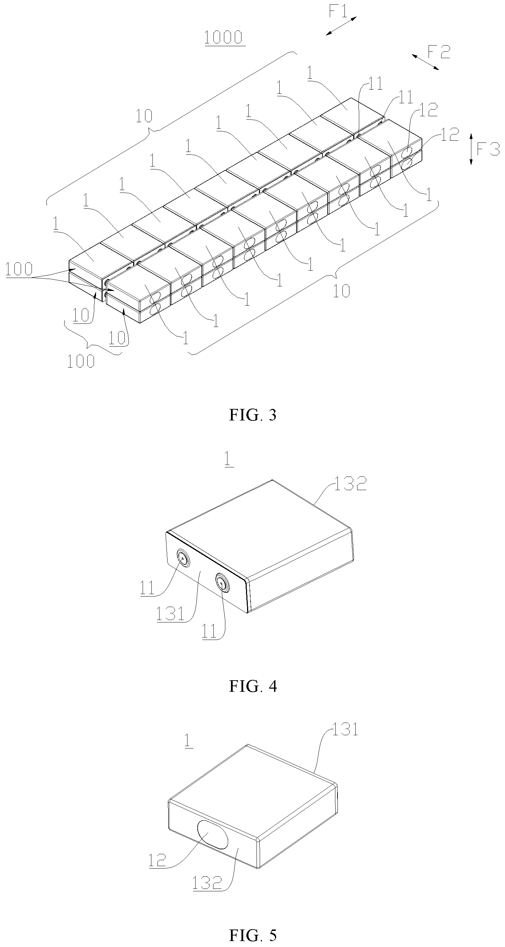

As shown in FIG. 3, the battery 1000 includes at least one cell group 100. The cell group 100 includes two cell rows 10. Each cell row 10 includes at least one cell 1. Each cell 1 is provided with an electrical connection portion 11 at a side of the cell 1 facing the other cell row 10 in the same group 100. Each cell 1 is further provided with a pressure relief portion 12. The pressure relief portion 12 and the electrical connection portion 11 are arranged at different sides of the cell 1. The term "same group" refers to a same cell group 100.

Referring to FIG. 3 to FIG. 6, a surface of the cell 1 facing the other cell row 10 in the same group 100 is a first end wall 131. The electrical connection portion 11 of the cell 1 is disposed at the first end wall 131. The pressure relief portion 12 of the cell 1 is disposed at another wall surface of the cell 1 except for the first end wall 131.

Since the electrical connection portion 11 of the cell 1 and the pressure relief portion 12 of the cell 1 are respectively located at different surfaces of the cell 1, a relatively large distance is formed between the electrical connection portion 11 of the cell 1 and the pressure relief portion 12 of the cell 1, which effectively avoids problems of insulation failure, high-voltage ignition, and the like caused by conductive particles in discharge discharged from the cell 1 through the pressure relief portion 12 flowing to the electrical connection portion 11 under the condition of thermal runaway and the like. Thus, a creepage gap between conductive components in the battery 1000 is ensured to avoid a short-circuit.

At the same time, the electrical connection portion 11 of the cell 1 and the pressure relief portion 12 of the other cell row 10 in the same cell group 100 are not corresponding to each other. Therefore, the electrical connection portion 11 of the cell 1 is protected from an influence of discharge discharged from other cells 1 through the pressure relief portions 12. That is, an influence of discharge discharged from the cell 1 through the pressure relief portion 12 on electrical connection portions 11 of other cells 1 is reduced, and the use safety and reliability of the battery 1000 are ensured.

In an exemplary embodiment of the present disclosure, the electrical connection portions 11 of the cells 1 are arranged face to face between the two cell rows 10 in the same cell group 100. The pressure relief portion 12 of each cell 1 is not disposed towards the electrical connection portion 11 of any other cell 1. The pressure relief portion 12 of each cell 1 does not emit towards any electrical connection portion 11 in the same cell row 10, and does not emit towards any electrical connection portion 11 in the other cell row 10 in the same cell group 100, thereby effectively ensuring that the electrical connection portion 11 of each cell 1 is not affected by discharge discharged from other cells 1. In this way, the use safety and reliability of the battery 1000 are ensured.

In addition, since the electrical connection portions 11 are opposite to each other between the two cell rows 10 in the same cell group 100, an electrical connection of the two cell rows 10 in the same cell group 100 is realized, thereby contributing to increased productivity and centralized protection of the electrical connection, etc.

According to the battery 1000 of the embodiments of the present disclosure, the pressure relief portion 12 of the cell 1 and the electrical connection portion 11 of the cell 1 are respectively arranged at different surfaces of the cell 1, which can effectively avoid insulation failure problems such as high-voltage ignition caused by conductive particles and the like in the discharge discharged from the cell 1 through the pressure relief portion 12 flowing to the electrical connection portion 11. In this way, the use safety and reliability of the battery 1000 are ensured. When the battery 1000 disclosed in the embodiments of the present disclosure is used in the electrical device 2000, a power supply system of the electrical device 2000 can adopt the battery 1000 disclosed in the present disclosure, allowing the use safety and reliability of the electrical device 2000 to be improved.

In some embodiments, the pressure relief portion 12 is disposed at a side of the cell 1 facing away from the other cell row 10 in the same group. In the examples shown in FIG. 3 to FIG. 5, a side of the cell 1 facing the other cell row 10 in a same cell group 100 is a first end wall 131. A side of the cell 1 facing away from the other cell row 10 in the same cell group 100 is a second end wall 132. The electrical connection portion 11 is disposed at the first end wall 131, and the pressure relief portion 12 is disposed at the second end wall 132. Therefore, a distance between the electrical connection portion 11 and the pressure relief portion 12 can be further increased, and the electrical connection portion 11 can be better protected from the influence of the discharge discharged through the pressure relief portion 12. That is, a probability of the electrical connection portion 11 that is influenced is smaller, and the use safety and reliability of the battery 1000 are better.

In some embodiments, the pressure relief portion 12 and the electrical connection portion 11 are disposed at two length ends of the cell 1. In the examples shown in FIG. 3 to FIG. 5, a length direction of the cell 1 directs to the other cell row 10 in the same cell group 100. Two sidewall surfaces of the cell 1 that are opposite to each other in the length direction are respectively the first end wall 131 and the second end wall 132. The first end wall 131 faces towards the other cell row 10 in the same cell group 100. The electrical connection portion 11 is disposed at the first end wall 131, and the pressure relief portion 12 is disposed at the second end wall 132. Therefore, the distance between the electrical connection portion 11 and the pressure relief portion 12 can be effectively increased, and the electrical connection portion 11 can be better protected from the discharge discharged through the pressure relief portion 12. That is, the probability of the electrical connection portion 11 that is influenced is smaller, and the use safety and reliability of the battery 1000 are better.

The present disclosure is not limited thereto. For example, in other embodiments of the present disclosure, a width direction of the cell 1 can direct to the other cell row 10 in the same cell group 100. In this case, the electrical connection portion 11 is disposed at a sidewall surface of the cell 1 in the width direction. Alternatively, the thickness direction of the cell 1 can direct to the other cell row 10 in the same cell group 100. In this case, the electrical connection portion 11 is disposed at a sidewall surface of the cell 1 in the thickness direction, the detail of which is omitted herein.

In some embodiments, such as shown in FIG. 3 to FIG. 5, the pressure relief portion 12 and the electrical connection portion 11 are disposed at two sides of the cell 1 in a horizontal direction. That is, when the battery 1000 is in use, a sidewall surface (e.g., the second end wall 132) that the pressure relief portion 12 is disposed is not higher than a sidewall surface (e.g., the first end wall 131) that the electrical connection portion 11 is disposed. In this way, a problem that the discharge emitted from the pressure relief portion 12 having strong diffusion ability, due to a position of the pressure relief portion 12 relative to the electrical connection portion 11 being too high, diffuses to a relatively low electrical connection portion 11 can be avoided. Then, the electrical connection portion 11 can be better protected from the influence of the discharge discharged through the pressure relief portion 12. Further, by horizontally arranging the electrical connection portion 11 and the pressure relief portion 12, a height of the cell row 10 can be lowered, thereby lowering an overall height of the battery 1000.

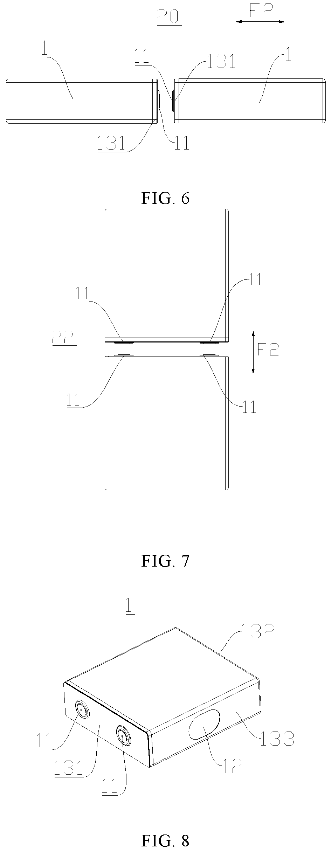

In other embodiments, as shown in FIG. 8, the side of the cell 1 facing the other cell row 10 in the same group (i.e., the same cell group 100) is a first end wall 131. The side of the cell 1 facing away from the other cell row 10 in the same group (i.e., the same cell group 100) is a second end wall 132. A peripheral sidewall 133 of the cell 1 is connected between the first end wall 131 and the second end wall 132. The pressure relief portion 12 is disposed at the peripheral sidewall 133. Thus, the electrical connection portion 11 and the pressure relief portion 12 are respectively located adjacent sides of the cell 1, which allows a certain safety distance to be maintained between the electrical connection portion 11 and the pressure relief portion 12, thereby reducing the influence of the discharge discharged through the pressure relief portion 12 on the electrical connection portion 11 and improving the use safety and reliability of the battery 1000.

In some optional examples, as shown in FIG. 3 to FIG. 5, each cell row 10 includes a plurality of cells 1 arranged in a first direction F1. Two cell rows 10 in a same group are arranged in a second direction F2. Two end walls of the cell 1 opposite to each other in the second direction F2 are respectively the first end wall 131 and the second end wall 132. The first end wall 131 faces towards the other cell row 10 in the same group (i.e., the same cell group 100). The second end wall 132 faces away from the other cell row 10 in the same cell group (i.e., the same cell group 100). When the electrical connection portion 11 and the pressure relief portion 12 are opposite to each other, the electrical connection portion 11 is disposed at the first end wall 131, and the pressure relief portion 12 is disposed at the second end wall 132.

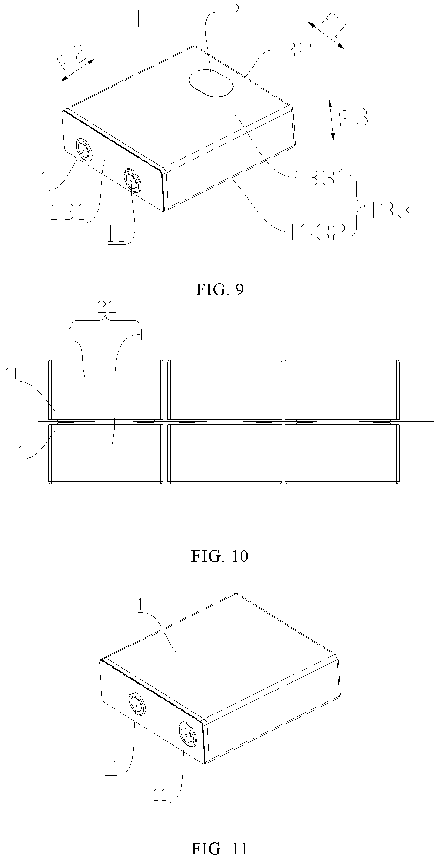

In some optional examples, in combination with FIG. 9, when the electrical connection portion 11 and the pressure relief portion 12 are respectively located at adjacent sides of the cell 1, the peripheral sidewall 133 can include a first sidewall 1331 and a second sidewall 1332 that are opposite to each other in a third direction F3. When the electrical connection portion 11 and the pressure relief portion 12 are respectively located at adjacent sides of the cell 1, the pressure relief portion 12 can be disposed at the first sidewall 1331. Any two of the first direction F1, the second direction F2, and the third direction F3 are perpendicular to each other. Therefore, the pressure relief portion 12 can avoid to be disposed at adjacent positions of the plurality of cells 1 in the same cell row 10, thereby avoiding pressure relief at positions between adjacent two cells 1 in the same cell row 10. In this way, a collection of discharged gas is facilitated, influence of the heat diffusion is reduced, the structural compactness of the battery is improved, and the space occupation is saved.

In some embodiments, as shown in FIG. 9, when the pressure relief portion 12 is disposed at the first sidewall 1331, the electrical connection portion 11 is disposed closer to the second sidewall 1332 than to the first sidewall 1331. That is, in the third direction F3, a distance between the electrical connection portion 11 and the first sidewall 1331 is greater than a distance between the electrical connection portion 11 and the second sidewall 1332. Thus, the distance between the electrical connection portion 11 and the pressure relief portion 12 can be further increased, which can reduce the influence of the discharge discharged through the pressure relief portion 12 on the electrical connection portion 11 and improve the safety and reliability of the battery 1000.

In some embodiments, as shown in FIG. 9, when the pressure relief portion 12 is disposed at the first sidewall 1331, the pressure relief portion 12 is disposed closer to the second end wall 132 than to the first end wall 131. That is, a distance between the pressure relief portion 12 and the first end wall 131 is greater than a distance between the pressure relief portion 12 and the second end wall 132 in the second direction F2. Therefore, the distance between the electrical connection portion 11 and the pressure relief portion 12 can be further increased, and the influence of the discharge discharged through the pressure relief portion 12 on the electrical connection portion 11 can be reduced, which can improve the safety and reliability of the battery 1000.

In some embodiments, as shown in FIG. 3, a thickness direction of the cell 1 (e.g., the third direction F3 shown in FIG. 3) is perpendicular to a horizontal direction. It can be understood that a thickness of the cell 1 is smaller than a length of the cell 1, the thickness of the cell 1 is smaller than a width of the cell 1, and the length of the cell 1 is greater than or equal to the width of the cell 1. Since the thickness direction of the cell 1 is perpendicular to the horizontal direction, which is equivalent to the thickness direction of the cell 1 being a vertical direction. In this case, the cell 1 lies flat, occupying a small vertical space and reducing the overall height of the battery 1000. Therefore, a height of the center of gravity of the cell 1 is reduced, and a splashing range of the cell 1 is narrowed.

It can be understood that the lower the height of the center of gravity of the cell 1 is, the lower a height of splashing caused by pressure relief of the cell 1 through the pressure relief portion 12 is. Therefore, an influence range of the cell 1 splashing in an up-down direction can be narrowed. At the same time, a distance that cell 1 can splash is smaller, which is beneficial to enhancing the safety performance. For example, when the cell 1 is relieved, the discharge is discharged through the pressure relief portion 12. Since the cell 1 lies flat, a height of the pressure relief portion 12 can be reduced, and a height of a splashing position of the pressure relief portion 12 can be effectively reduced, thereby reducing a diffusion area and a splash area, and improving the overall safety performance of the battery 1000.

Further, in some optional examples, as shown in FIG. 3, the cell row 10 can include a plurality of cells 1 arranged in a width direction of the cell 1 (e.g., the first direction F1 shown in FIG. 3). In this case, a sidewall surface (e.g., a first end wall 131) in the length direction of the cell 1 faces towards the other cell row 10 in the same cell group 100. Thus, when a size of the cell row 10 in the width direction of the cell 1 is fixed, the cell row 10 can include more cells 1, thereby improving a capacity of the battery 1000.

The present disclosure is not limited thereto. For example, in other embodiments of the present disclosure, the cell row 10 can further include a plurality of cells 1 arranged in the length direction of the cell 1. In this case, a side surface of the cell 1 in the width direction faces towards the other cell row 10 in the same cell group 100, the detail of which is omitted here.

In some embodiments, as shown in FIG. 3, each cell row 10 includes a plurality of cells 1 arranged in a first direction F1. Two cell rows 10 in a same group are arranged in a second direction F2 perpendicular to the first direction F1. As a result, the cell group 100 includes a relatively large number of cells 1 and has a relatively high capacity.

Further, as shown in FIG. 3, a multi-layer cell group is composed of a plurality of cell groups 100 arranged in a third direction F3. The third direction F3 is perpendicular to the first direction F1 and the second direction F2. Thus, the cell group 100 includes a larger number of cells 1 and has a higher capacity. In addition, by providing that each cell 1 is provided with the electrical connection portion 11 at the side of the cell facing the other cell row 10 in the same group and the pressure relief portion 12 and the electrical connection portion 11 are arranged at different sides of the cell 1, the safety reliability of the multi-layer cell group can be better ensured, and the adverse effect on electrical connection portions 11 of other cell groups 100 in a pressure relief process of the cell 1 can be lowered.

In some embodiments, as shown in FIG. 3, a number of cell groups 100 in the multi-layer cell group is less than a number of cells 1 in the cell row 10. Therefore, on the premise of ensuring that a certain number of cell rows 10 are arranged, an extrusion force subjected by the cell row 10 in a height direction is convenient to be reduced, and the influence of the extrusion force on the intensity of the cell 1 when the cell 1 is relieved is reduced.

In some embodiments, as shown in FIG. 3, the multi-layer cell group includes two or three cell groups 100. That is, the number of cell groups 100 included in the multi-layer cell group is two or three. Therefore, on the premise of ensuring that a certain number of cell rows 10 are arranged, an extrusion force subjected by the cell row 10 in the height direction is convenient to be reduced, and the influence of the extrusion force on the intensity of the cell 1 when the cell 1 is relieved is reduced. The present disclosure is not limited thereto. For example, in other embodiments of the present disclosure, the multi-layer cell group can include more than three cell groups 100, the detail of which is omitted herein.

In some embodiments, as shown in FIG. 3, FIG. 6, and FIG. 7, two cells 1 opposite to each other in a same group form an opposition unit 20. At least one opposition unit 20 is a second opposition unit 22. Electrical connection portions 11 of the two cells 1 in the second opposition unit 22 are exactly opposite to each other. That is, in an opposite direction of the two cells 1 in the second opposition unit 22 (e.g., the second direction F2 shown in the figure), orthographic projections of the electrical connection portions 11 of the two cells 1 in the second opposition unit 22 coincide. In this way, the cell 1 can be easily processed. For example, quantity production of cell 1 having the same specification can be realized, thereby reducing costs.

In some embodiments, as shown in FIG. 10, in the second opposition unit 22, at least one pair of electrical connection portions 11 exactly opposite to each other abuts against and supports each other. Thus, a gap between the two electrical connection portions 11 can be reduced, which can improve the structural compactness and the space utilization. In addition, the overall structural strength and the stability of the battery 1000 can be improved. It should be noted that abutment and support can be direct or indirect abutment, can constitute an electrical connection or insulation. When the electrical connection portions are electrically connected, a connection in parallel or series can be realized, which is not limited herein.

In some optional examples, the side of the cell 1 facing the other cell row 10 in a same group (the same cell group 100) is a first end wall 131. In the second opposition unit 22, a plurality of electrical connection portions 11 on each cell 1 protrudes from the first end wall 131 at different heights. The electrical connection portions 11 that are exactly opposite to each other and have a larger protruding height (relatively large) abut against and support each other, and the remaining electrical connection portions 11 (i.e., the protruding height is relatively small) that are exactly opposite to each other are clearance-fit. As a result, the two cell rows 10 in the same cell group 100 to be connected in series are facilitated.

In some optional examples, the side of the cell 1 facing the other cell row 10 in a same group (the same cell group 100) is a first end wall 131. In the second opposition unit 22, a plurality of electrical connection portions 11 on each cell 1 protrudes from the first end wall 131 at a same height, and the electrical connection portions 11 that are exactly opposite to each other abut against and support each other. As a result, the two cell rows 10 in the same cell group 100 to be connected in parallel are facilitated.

In short, when the two cell rows 10 are connected in parallel, positive poles and negative poles of the two cell rows 10 abut against each other. When the two cell rows 10 are connected in series, the poles of the two cell rows 10 are arranged high and low, the high poles abut against each other to enhance the structural strength, and the low poles are as low as possible, saving a space between the two cell rows 10.

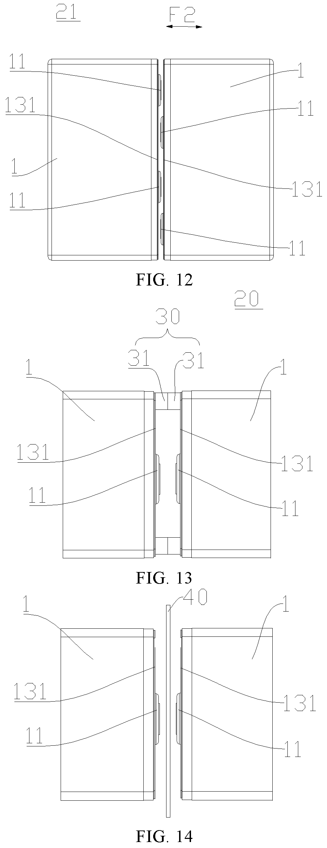

In some embodiments, as shown in FIG. 11 and FIG. 12, two cells 1 opposite to each other in a same group form an opposition unit 20. At least one opposition unit 20 is a first opposition unit 21. Electrical connection portions 11 of the two cells 1 in the first opposition unit 21 are offset from each other. That is, in an opposite direction of the two cells 1 in the first opposition unit 21 (e.g., the second direction F2 shown in the figure), orthographic projections of the electrical connection portions 11 of the two cells 1 in the first opposition unit 21 do not overlap or are offset from each other. Thus, by providing the opposite electrical connection portions 11 in an offset manner, a distance between the two cell rows 10 in the same cell group 100 can be reduced, which can improve the space utilization and grouping efficiency of the battery 1000.

It can be understood that when the opposite electrical connection portions 11 are offset from each other, two adjacent cell rows 10 can be electrically connected through electrical connection pieces of diversified designs, the detail of which will be omitted herein.

In addition, it can be understood that two cell rows 10 in the same cell group 100 are two opposite cell rows 10. The electrical connection portion 11 of one cell row 10 and the electrical connection portion 11 of the other cell row 10 in the same cell group 100 are opposite electrical connection portions 11. In the same cell group 100, the pressure relief portion 12 of one cell row 10 and the pressure relief portion 12 of the other cell row 10 are opposite pressure relief portions 12. The first end wall 131 of one cell row 10 and the first end wall 131 of the other cell row 10 in the same cell group 100 are opposite first end walls 131.

In addition, an offset direction of the electrical connection portions 11 is not limited. In some embodiments, the side of the cell 1 facing the other cell row 10 in the same group is a first end wall 131. In the first opposition unit 21, the opposite electrical connection portions 11 are offset from each other in a width direction of the first end wall 131. Therefore, a length size of the cell 1 can be reduced.

In some embodiments, the side of the cell 1 facing the other cell row 10 in the same group is a first end wall 131. In the first opposition unit 21, the opposite electrical connection portions 11 are offset from each other in a length direction of the first end wall 131. Therefore, a width size of the cell 1 can be reduced.

In some embodiments, in the first opposition unit 21, the opposite electrical connection portions 11 are diagonally offset from each other. The first opposition unit 21 is orthographic projected in an arrangement direction of the two cells 1 (e.g., the second direction F2 shown in the figure). Two electrical connection portions 11 of one cell 1 are respectively located at an upper left corner and a lower right corner. Two electrical connection portions 11 of the other cell 1 are respectively located at a lower left corner and an upper right corner. Thus, the space can be fully utilized and the electrical connection portions 11 can be offset from each other.

In addition, the manner in which the opposite electrical connection portions 11 can be offset from each other is optional. For example, in some optional solutions, the side of the cell 1 facing the other cell row 10 in the same group is a first end wall 131. In the first opposition unit 21, the respective electrical connection portions 11 each have a same position relative to the first end wall 131, and the opposite first end walls 131 are offset from each other. Thus, the cell 1 with a same specification can be processed and production costs can be reduced.

For example, in some optional solutions, the side of the cell 1 facing the other cell row 10 in the same group is a first end wall 131. In the first opposition unit 21, the respective electrical connection portions 11 have different positions relative to the first end wall 131, and the opposite first end walls 131 are exactly opposite to each other. Therefore, the two cell rows 10 in the cell group 100 can be arranged side by side, which solve a problem of space waste caused by an overall offset of the two cell rows 10. The structural compactness can be improved, and the space can be saved.

In some embodiments, as shown in FIG. 12, the side of the cell 1 facing the other cell row 10 in the same group is a first end wall 131. In the first opposition unit 21, a distance between the opposite first end walls 131 is smaller than or equal to a sum of heights of the opposite electrical connection portions 11 protruding from the first end walls 131. Thus, the structural compactness can be further improved, and the space can be better utilized.

In some embodiments, as shown in FIG. 13, two cells 1 opposite to each other in a same group form an opposition unit 20. Two cells 1 in at least one opposition unit 20 abut against and support each other through a support structure 30. Therefore, the problem of structural strength can be solved. When the opposite electrical connection portions 11 are exactly opposite to and offset from each other, the support structure 30 can be adopted to support the cells. In this way, the structural strength can be improved, and the reliability of the battery 1000 can be improved.

It should be noted that when the opposite electrical connection portions 11 are exactly opposite to each other and abut against and support each other, the electrical connection portions 11 can be used as the support structure 30.

It should be noted that when the electrical connection portion 11 is not used as the support structure 30, the support structure 30 can be disposed only at one of the cells 1, or can be disposed at the two opposite cells 1 that are exactly opposite to each other.

In some embodiments, as shown in FIG. 13, the side of the cell 1 facing the other cell row 10 in a same group is a first end wall 131. The support structure 30 includes a support table 31 disposed at the first end wall 131. That is, the support table 31 and the electrical connection portion 11 disposed at the same first end wall 131 are spaced from each other. Therefore, the cells 1 can be supported through the support table 31, which can improve the structural strength. In addition, an insulation requirement of a required insulation position between two cell rows 10 can be easily realized.

In another exemplary embodiment of the present disclosure, the support table 31 can be located at an edge and scattered, rather than be an annular structure enclosing an entire circumference of the first end wall 131, thereby leaving room for electrical connections and routing.

In another exemplary embodiment of the present disclosure, as shown in FIG. 13, each of the two cells 1 abutting against and supporting each other through the support structure 30 is provided with the support table 31. The opposite support tables 31 are opposite to each other for abutment and support. Therefore, the cell 1 can be processed with a uniform specification, which is conducive to improving production efficiency.

In another exemplary embodiment of the present disclosure, only one of the two cells 1 abutting against and supporting each other through the support structure 30 is provided with the support table 31. The support table 31 support the first end wall 131 of the opposite cell 1. Therefore, the difficulty of assembly can be reduced, and problems such as unstable support caused by the dislocation of the opposite support table 31 can be avoided.

It should be noted that a processing method of the support table 31 is not limited. For example, in some embodiments, the support table 31 can be integrally formed at the first end wall 131. Thus, mounting steps can be reduced, which facilitates grouping. In other embodiments, the support table 31 and the first end wall 131 can be separate structures, and the support table 31 is assembled to the first end wall 131. Therefore, the support table 31 can be manufactured independently for convenience of molding.

In some embodiments, the support structure 30 can include a filling adhesive disposed between the opposite cells 1. That is, the fixing support of the two opposite cells 1 can be realized through the adhesive to enhance the structural strength and simplify the processing of the cell 1. It should be noted that the support structure 30 can include the support table 31, the filling adhesive, and the like to further improve the structural strength.

In some embodiments, an insulator 40 is disposed between the two cell rows 10 in the cell group 100. Therefore, the electrical connection portions 11 of the two cell rows 10 can be insulated and isolated. The problem of high voltage ignition due to too small creepage distance between the electrical connection portions 11 of the two cell rows 10 can be avoided. In addition, when thermal runaway occurs in the battery 1000, discharge discharged through a certain pressure relief portion 12 can be effectively prevented from conducting the two cell rows 10 and further causing a high voltage ignition, thereby improving the safety and reliability of the battery 1000.

In some optional examples, as shown in FIG. 14, the insulator 40 can include an insulation sheet and an insulation adhesive disposed between the two cell rows 10. The insulation sheet is fixed to the two cell rows 10 by the insulation adhesive. The insulation adhesive is a filling adhesive or a double-sided adhesive. Thus, an effective insulating effect can be achieved, and a high voltage protection effect can be provided. The overall structural strength of the cell group 100 can be improved. A material of the insulation sheet is not limited, such as mica sheet, etc., and can have a high-temperature resistant and fire prevention effect.

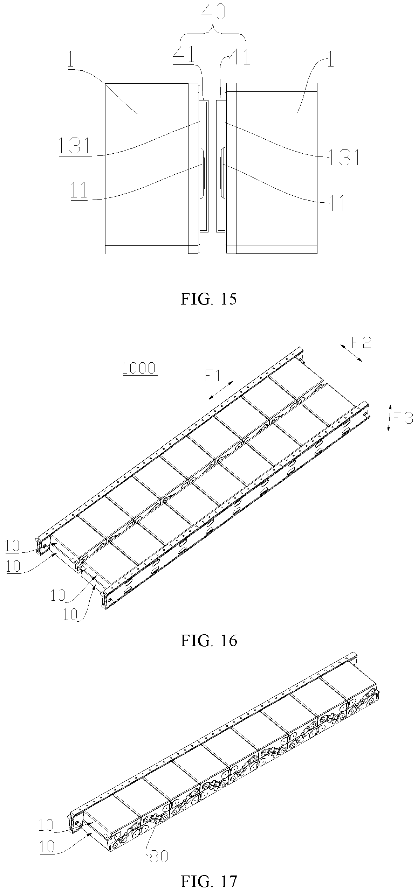

In some optional examples, as shown in FIG. 15, at least one of the two cell rows 10 in the cell group 100 is provided with an insulation cover 41. The insulation cover 41 covers the electrical connection portions 11 on the corresponding cell row 10 (i.e., the cell row 10 that the insulation cover 41 is disposed at). Therefore, a fixing method of the insulation cover 41 is convenient, which has a more effective resistance to the high pressure ignition. It is worth noting that the insulation cover 41 can be disposed at one of the cell rows 10, or the insulation cover 41 can be disposed at two cell rows 10 respectively, detail of which is omitted herein.

In some embodiments of the present disclosure, each cell row 10 includes a plurality of cells 1. The opposite electrical connection portions 11 in a same group (the same cell group 100) are not connected. That is, the cell row 10 at one side is electrically connected, and then output to the outside as a whole. Thus, the electrical connection can be simplified.

In some other embodiments of the present disclosure, as shown in FIG. 16, each cell row 10 includes a plurality of cells 1 arranged in a first direction F1. Two cell rows 10 in a same group are arranged in a second direction F2. A multi-layer cell group is composed of a plurality of cell groups 100 arranged in a third direction F3. For example, any two of the first direction F1, the second direction F2, and the third direction F3 are perpendicular to each other. Referring to FIG. 17, the cell rows 10 at a same side in the multi-layer cell group (i.e., adjacent two cell rows 10 having the electrical connection portions 11 facing the same side) are electrically connected. That is, adjacent cell rows 10 at the same side are electrically connected internally and output to the outside as a whole. Thus, the electrical connection can be simplified.

In other embodiments of the present disclosure, each cell row 10 includes a plurality of cells 1. The opposite electrical connection portions 11 in a same group are electrically connected. For example, the opposite electrical connection portions 11 in the same group are directly butt-welded, thereby improving the structural compactness and optimizing the space utilization. Or, the opposite electrical connection portions 11 in the same group are connected through a conductive sheet 80. That is, the two cell rows 10 opposite to each other are electrically connected through a bus sheet, reducing the process difficulty.

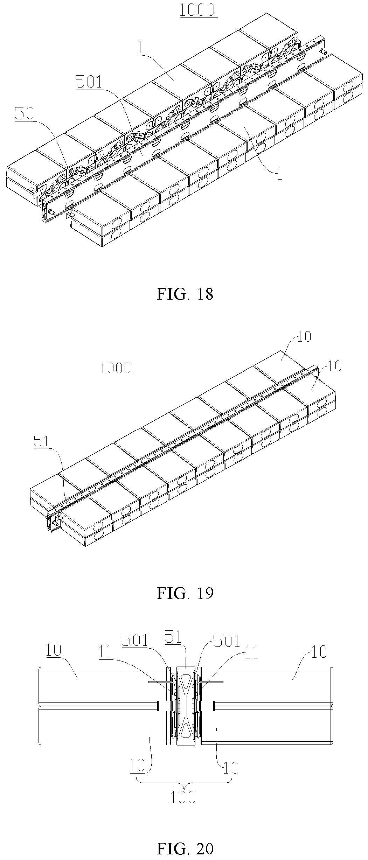

In some embodiments of the present disclosure, as shown in FIG. 18, the battery 1000 further includes a thermal management member 50. The thermal management member 50 includes a heat exchange portion 501 and is configured to exchange heat with the cell 1. For example, the heat exchange portion 501 is configured to exchange heat with the cell 1 to take away heat of the cell 1, or the heat exchange portion 501 is configured to transfer heat to the cell 1 to realize preheating of the cell 1. Therefore, the cell 1 has an appropriate operating temperature to ensure the service life of the cell 1.

In some embodiments, as shown in FIG. 18 to FIG. 20, the thermal management member 50 can include a first beam 51 disposed between two cell rows 10 in a same group (the same cell group 100). Each of the sides of the first beam 51 facing the cell rows 10 is provided with the heat exchange portion 501. Thus, the heat exchange portion 501 is disposed towards the electrical connection portion 11 and can be configured to adjust a temperature of the electrical connection portion 11. For example, the heat exchange portion 501 can be configured to cool overcurrent components such as poles, bus bars, and the like, thereby improving the operational safety and reliability of the battery 1000.

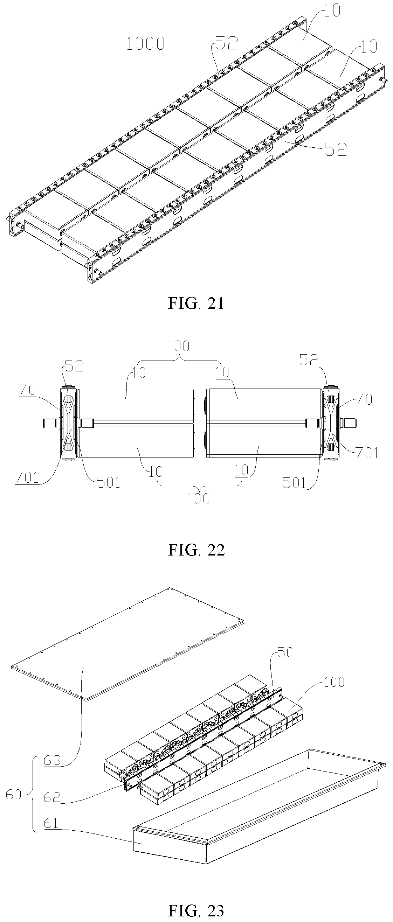

In some embodiments, as shown in FIG. 21 and FIG. 22, the thermal management member 50 can further include a second beam 52 disposed at each of opposite sides of a same group (the same cell group 100) that includes two cell rows. Each side of the second beam 52 facing the corresponding cell row 10 is provided with the heat exchange portion 501. That is, the second beam 52 is disposed at a side of each cell row 10 facing away from the other cell row 10, and the electrical connection portion 11 is disposed at the side of the second beam 52 facing the cell row 10 to adjust a temperature of the cell row 10. Thus, by arranging the second beam 52 away from the electrical connection portion 11, when a temperature control liquid flow path is provided in the second beam 52, a problem of short-circuit to the electrical connection portions 11 due to liquid leakage when liquid leakage occurs unexpectedly in the second beam 52 can be avoided.

In some embodiments, as shown in FIG. 23, the battery 1000 further includes a box member 60. The box member 60 includes a side enclosing panel 61 and a partition beam 62. The partition beam 62 is located within a space enclosed by the side enclosing panel 61 to divide the space into a plurality of accommodation cavities. Each of the plurality of accommodation cavities accommodates the cell row 10, and the partition beam 62 is configured as the thermal management member 50. Thus, the partition beam 62 is configured as the thermal management member 50 to adjust the temperature of the cell 1, thereby saving space occupation and improving space utilization.

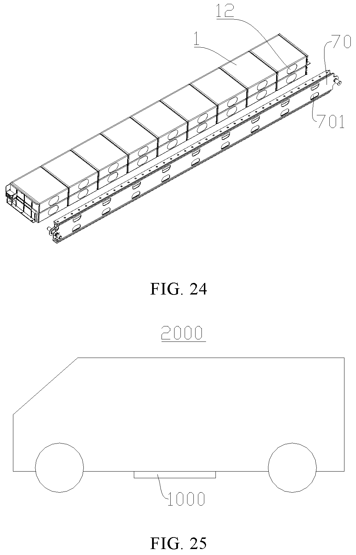

In some embodiments, as shown in FIG. 24, the battery 1000 further includes a discharge member 70 having a discharge cavity 701 formed therein. The discharge member 70 is disposed at a side towards which the pressure relief portion 12 faces. The discharge cavity 701 is configured to receive discharge discharged through the pressure relief portion 12. That is, the discharge member 70 is disposed at the side of the cell 1 at which the pressure relief portion 12 is disposed, thereby facilitating collection of the discharge, avoiding the adverse effects caused by disorderly diffusion of the discharge, reducing the diffusion effect due to the thermal runaway, and improving the safety of the battery 1000.

In another exemplary embodiment of the present disclosure, a heat exchange portion 501 is further disposed at a side of the discharge member 70 facing towards the cell row 10. Therefore, the discharge member 70 can be configured as the thermal management member 50, such as the second beam 52 described above. Two members can be combined into one, having dual functions of heat exchange and discharge collection, thereby saving space occupation and improving space utilization.

According to the embodiments of the present disclosure in the second aspect, an electrical device 2000 includes the battery 1000 according to the embodiments of the present disclosure in the first aspect. The battery 1000 is configured to provide electrical energy to the electrical device 2000. Thus, by adopting the battery 1000 described above, the operational safety and reliability of the electrical device 2000 can be improved.

In another exemplary embodiment of the present disclosure, as shown in FIG. 25, when the battery 1000 is used in a vehicle, the battery 1000 can be disposed at a bottom, or a head, or a tail of the vehicle. The battery 1000 can be configured to supply power to the vehicle. For example, the battery 1000 can serve as an operating power source of the vehicle. The vehicle can further include a controller and a motor. The controller is configured to control the battery 1000 to supply power to the motor, e.g., to meet operating power requirements for starting, navigation, and driving of the vehicle.

It should be noted that, the embodiments and features in the embodiments of the present disclosure can be combined without conflicting each other.

While some embodiments of the present disclosure have been described above, the present disclosure is not limited to these embodiments. For those skilled in the art, various changes and variations can be made to the present disclosure. Any modification, equivalent substitution, improvement, etc., made within the spirit and principles of the present disclosure shall fall within the scope of the present disclosure.

## Claims

1. A battery, comprising:
at least one cell group, each of the at least one cell group comprising two cell rows, each of the two cell rows comprising at least one cell, each of the at least one cell being provided with an electrical connection portion at a side of the cell facing the other cell row in the same group, each of the at least one cell being further provided with a pressure relief portion, and the pressure relief portion and the electrical connection portion being arranged at different sides of the cell.

2. The battery according to claim **1,** wherein the pressure relief portion is disposed at a side of the cell facing away from the other cell row in the same group.

3. The battery according to claim 2, wherein the pressure relief portion and the electrical connection portion are disposed at two length ends of the cell.

4. The battery according to claim 2 or 3, wherein the pressure relief portion and the electrical connection portion are disposed at two sides of the cell in a horizontal direction.

5. The battery according to claim 1, wherein:
the side of the cell facing the other cell row in the same group is a first end wall;
a side of the cell facing away from the other cell row in the same group is a second end wall; and
a peripheral sidewall of the cell is connected between the first end wall and the second end wall, the pressure relief portion being disposed at the peripheral sidewall.

6. The battery according to claim 5, wherein:
each of the two cell rows comprises a plurality of cells arranged in a first direction;
two cell rows in a same group are arranged in a second direction;
the peripheral sidewall comprises a first sidewall and a second sidewall opposite to each other in a third direction, the pressure relief portion being disposed at the first sidewall; and
any two of the first direction, the second direction, and the third direction are perpendicular to each other.

7. The battery according to claim 6, wherein the electrical connection portion is disposed closer to the second sidewall than to the first sidewall.

8. The battery according to any one of claims 5 to 7, wherein the pressure relief portion is disposed closer to the second end wall than to the first end wall.

9. The battery according to any one of claims 1 to 8, wherein a thickness direction of the cell is perpendicular to a horizontal direction of the cell.

10. The battery according to claim 9, wherein each of the two cell rows comprises a plurality of cells arranged in a width direction of the cell.

11. The battery according to any one of claims 1 to 10, wherein:
each of the two cell rows comprises a plurality of cells arranged in a first direction; and
two cell rows in a same group are arranged in a second direction perpendicular to the first direction.

12. The battery according to claim 11, wherein a multi-layer cell group is composed of a plurality of cell groups arranged in a third direction, the third direction being perpendicular to the first direction and the second direction.

13. The battery according to claim 12, wherein a number of cell groups in the multi-layer cell group is less than a number of cells in the cell row.

14. The battery according to claim 12 or 13, wherein the multi-layer cell group comprises two or three cell groups.

15. The battery according to any one of claims 1 to 14, wherein:
two cells opposite to each other in a same group form an opposition unit, at least one opposition unit being a first opposition unit; and
electrical connection portions of the two cells in the first opposition unit are offset from each other.

16. The battery according to claim 15, wherein:
the side of the cell facing the other cell row in the same group is a first end wall; and
in the first opposition unit, the respective electrical connection portions each have a same position relative to the first end wall, the opposite first end walls being offset from each other.

17. The battery according to claim 15, wherein:
the side of the cell facing the other cell row in the same group is a first end wall; and
in the first opposition unit, the respective electrical connection portions have different positions relative to the first end wall, the opposite first end walls being exactly opposite to each other.

18. The battery according to any one of claims 15 to 17, wherein:
the side of the cell facing the other cell row in the same group is a first end wall; and
in the first opposition unit, the opposite electrical connection portions are offset from each other in a length direction of the first end wall.

19. The battery according to any one of claims 15 to 17, wherein:
the side of the cell facing the other cell row in the same group is a first end wall; and
in the first opposition unit, the opposite electrical connection portions are offset from each other in a width direction of the first end wall.

20. The battery according to any one of claims 15 to 17, wherein:
the side of the cell facing the other cell row in the same group is a first end wall; and
in the first opposition unit, the opposite electrical connection portions are diagonally offset from each other.

21. The battery according to any one of claims 15 to 20, wherein:
the side of the cell facing the other cell row in the same group is a first end wall; and
in the first opposition unit, a distance between the opposite first end walls is smaller than or equal to a sum of heights of the opposite electrical connection portions protruding from the first end walls.

22. The battery according to any one of claims 1 to 21, wherein:
two cells opposite to each other in a same group form an opposition unit, at least one opposition unit being a second opposition unit; and
electrical connection portions of the two cells in the second opposition unit are exactly opposite to each other.

23. The battery according to claim 22, wherein in the second opposition unit, at least one pair of electrical connection portions exactly opposite to each other abuts against and supports each other.

24. The battery according to claim 23, wherein:
the side of the cell facing the other cell row in a same group is a first end wall; and
in the second opposition unit, a plurality of electrical connection portions on each cell protrudes from the first end wall at different heights, the electrical connection portions with a larger protruding height abutting against and supporting each other.

25. The battery according to claim 23, wherein:
the side of the cell facing the other cell row in a same group is a first end wall; and
in the second opposition unit, a plurality of electrical connection portions on each cell protrudes from the first end wall at a same height, the electrical connection portions exactly opposite to each other abutting against and supporting each other.

26. The battery according to any one of claims 1 to 25, wherein two cells opposite to each other in a same group form an opposition unit, two cells in at least one opposition unit abutting against and supporting each other through a support structure.

27. The battery according to claim 26, wherein:
the side of the cell facing the other cell row in a same group is a first end wall; and
the support structure comprises a support table disposed at the first end wall.

28. The battery according to claim 27, wherein:
each of the two cells abutting against and supporting each other through the support structure is provided with the support table; and
the opposite support tables are opposite to each other to abut against and support each other.

29. The battery according to claim 27 or 28, wherein the support table is integrally formed at the first end wall.

30. The battery according to claim 27 or 28, wherein the support table is assembled to the first end wall.

31. The battery according to any one of claims 26 to 30, wherein the support structure comprises a filling adhesive disposed between the opposite cells.

32. The battery according to any one of claims 1 to 31, wherein an insulator is disposed between the two cell rows in the cell group.

33. The battery according to claim 32, wherein the insulator comprises an insulation sheet and an insulation adhesive disposed between the two cell rows, the insulation sheet being fixed to the two cell rows by the insulation adhesive, and the insulation adhesive being a filling adhesive or a double-sided adhesive.

34. The battery according to claim 32, wherein at least one of the two cell rows in the cell group is provided with an insulation cover, the insulation cover covering the electrical connection portions on the corresponding cell row.

35. The battery according to any one of claims 1 to 34, wherein:
each of the two cell rows comprises a plurality of cells; and
the opposite electrical connection portions in a same group are not connected.

36. The battery according to any one of claims 1 to 34, wherein:
each of the two cell rows comprises a plurality of cells arranged in a first direction;
two cell rows in a same group are arranged in a second direction; and
a multi-layer cell group is composed of a plurality of cell groups arranged in a third direction, the cell rows at a same side in the multi-layer cell group being electrically connected.

37. The battery according to any one of claims 1 to 34, wherein:
each of the two cell rows comprises a plurality of cells; and
the opposite electrical connection portions in a same group are electrically connected.

38. The battery according to claim 37, wherein the opposite electrical connection portions in the same group are directly butt-welded or connected through a conductive sheet.

39. The battery according to any one of claims 1 to 38, further comprising a thermal management member, wherein the thermal management member comprises a heat exchange portion and is configured to exchange heat with the cell.

40. The battery according to claim 39, wherein the thermal management member further comprises a first beam disposed between two cell rows in a same group, each side of the first beam facing the cell row being provided with the heat exchange portion.

41. The battery according to claim 39, wherein the thermal management member further comprises a second beam disposed at each of opposite sides of each cell group including two cell rows, each side of the second beam facing the corresponding cell row being provided with the heat exchange portion.

42. The battery according to any one of claims 39 to 41, further comprising a box member, wherein the box member comprises a side enclosing panel and a partition beam, the partition beam being located within a space enclosed by the side enclosing panel to divide the space into a plurality of accommodation cavities, each of the plurality of accommodation cavities being configured to accommodate the cell row, and the partition beam being configured as the thermal management member.

43. The battery according to any one of claims 1 to 42, further comprising a discharge member, wherein:
the discharge member is disposed at a side towards which the pressure relief portion faces; and
the discharge member has a discharge cavity configured to receive discharge discharged by the pressure relief portion.

44. The battery according to claim 43, wherein a heat exchange portion is further disposed at a side of the discharge member facing towards the cell row.

45. An electrical device, comprising the battery according to any one of claims 1 to 44, the battery being configured to provide electrical energy to the electrical device.
